# EUROPEAN PATENT APPLICATION

(11) **EP 2 638 808 A1**
(43) Date of publication of application: **18.09.2013**
(21) Application number: 13158356.9
(22) Date of filing: 08.03.2013
(51) Int. Cl.: A23K 1/00, A23K 1/10, A23K 1/18

(54) **Pet food making process**

(30) Priority: 13.03.2012 CN 201210064015; 30.10.2012 US 201213664382
(71) Applicant: Vital Source Group LLC, New York, NY 10001 (US)
(72) Inventor: Yan, ZhiYong, 211110 Nanjing (CN); Gao, Hongli, 210024 Nanjing (CN)
(74) Representative: Baldwin, Mark

(57) **Abstract**

This invention pertains to making pet food; more specifically, it involves making pet chews or jerky from either one, or a combination of: poultry, meat, rabbit, fish, pork skin, beef skin, rabbit skin, or fish skin. The ingredients can then be cut into pieces or cubes, minced into paste, or moulded into shapes; then frozen; followed by a process of vacuum microwave drying; sterilization; then packaging. The final product presents the same colour and often a strong fragrance of the original ingredients. This process protects both the nutrition of the original ingredients and its appetizing characteristics. Among other things, it could be a meaty pet snack, or it could be used as a nutrition supplement for your pet after proper rehydration.

## Description

### CROSS REFERENCE TO RELATED APPLICATIONS

This application claims the benefit of Patent Application No. 201210064015.5, filed on March 13th, 2012 in the People's Republic of China which is incorporated by reference herein in its entirety for all purposes.

### BACKGROUND OF INVENTION

### 1. FIELD OF THE INVENTION

This invention pertains to making pet food; more specifically, it involves making pet chews or jerky from either one, or a combination of: poultry, meat, fish, rabbit, pork skin, beef skin, fish, or rabbit skin.

### 2. DESCRIPTION OF RELATED ART

In modem society, more and more families have pets; these pets are often seen as additional members of the family by their owners. Primarily pet owners buy pet food; however, they also buy snacks for their pets in order to assist in training, improve their pet's nutrition, and simply to make their pet happy. In particular, dogs enjoy meaty snacks and chews, especially those made from pure meat products, such as: poultry, beef, pork, rabbit, fish, and the like.

In recent years, snacks and chews made of pure meat have become very popular among consumers, the two basic processes for making these pet snacks are listed below:

A. The first process involves drying with hot-air. This process involves using a constant stream of hot-air to heat the product's surface causing the moisture within the product to evaporate. Additionally, the constant blowing of the moisture away from the product's surface accelerates the drying process. Unfortunately, the high temperature and dehydration of the product cause the chemical bonds of the amino acids in the proteins to unravel; thereby losing much of the nutritional value of the original meat while simultaneously making the product harder and more difficult for pets to digest and metabolize. The loss of nutritional value is particularly hard on dogs of older and younger ages.

Furthermore, because the hot-air dried product was exposed to high-temperatures for extended periods of time; the unsaturated fat, vitamins, and enzymes become oxidized and destroyed, thereby removing the freshness and its associated taste from the product. Unfortunately, in order to combat this loss of freshness, it is customary for additives such as: preservatives, antioxidants, bleaches, foaming agents, colour retention agents, and the like to be added by manufacturers in order to prevent the hardening and oxidation that occurs during the hot-air drying process. These food additives, while meant to improve the product, in fact create a series of side-effects ranging from illness in pets to contamination of the manufacturer's working environment.

B. The second process commonly used utilizes freeze dehydration. In this process, drying is accomplished by freezing the product; then reducing the surrounding pressure to allow the frozen water in the product to sublimate directly from the solid phase to the gas phase: thus removing the moisture in the product through vacuity. Because of the considerable time and energy necessary for freeze dehydration; as well as the increased packaging costs for freeze-dried foods; production costs tend to be very high; likewise, the correlated price of the product becomes high, making it difficult for consumers to purchase. Additionally, freeze-dried products suffer the limitations of being easily shattered, making them hard to eat; they often need to be reconstituted with water; and if not consumed shortly after unsealing they absorb humidity quickly which can cause them to spoil.

### SUMMARY

This invention pertains to making pet food; more specifically, it involves making pet chews or jerky from either one, or a combination of: poultry, meat, fish, rabbit, pork skin, beef skin, rabbit, or fish skin. The ingredients can then be cut into pieces or cubes, minced into paste, or melded into shapes; then frozen; followed by a process of vacuum microwave drying; sterilization; then packaging. The final product presents the same colour and often a strong fragrance of the original ingredients. This process protects both the nutrition of the original ingredients and its appetizing characteristics. Among other things, it could be a meaty pet snack, or it could be used as a nutrition supplement for your pet after proper rehydration.

### OBJECTS AND ADVANTAGES

The present disclosure can provide a number of objects and advantages depending on the particular aspect, embodiment, and/or configuration. None of the particular objects and advantages that follow must be entirely satisfied as they are non-exclusive alternatives and at least one of the following objects and advantages is met; accordingly, several objects and advantages of the present invention are:
(a) to provide a means for keeping pet food air-tight during the drying process, thereby reducing the possibility of oxidation;
(b) to provide a means for keeping pet food temperature controlled around 50C degrees, thereby preserving most of the vitamins, unsaturated fat, and enzymes; thereby keeping it fresh and door-less;
(c) to provide a means for keeping the integrity of the pet food in good condition after drying thereby presenting the food truer to its original form;
(d) to provide a means to restore pet food to its fresh state after rehydration, making it easy to digest and absorb, particularly for younger and older dogs;
(e) to provide a means for microwave sterilization during the pet food drying process, thereby killing microbes and improving the safety of the product;
(f) to provide a means for maintaining the toughness and freshness of pet food after the drying process, thereby providing better taste and pleasure for the consumer;
(g) to provide a means for drying pet food that is easy to operate, conserves energy and time, and keeps the cost of production low; thereby increasing efficiency;
(h) to provide a means for drying pet food that doesn't require any food additives, including: preservatives, antioxidants, bleaches, blowing/foaming agents, colour retention agents, etc.; during production to achieve an artificial semblance of the product in its unadulterated state;
(i) to provide a mean for detecting metal in pet food;
(j) to provide a means for sanitizing pet food with irradiation;
these and other objectives and advantages of the instant invention will become apparent from the following description taken in conjunction with the accompanying examples and certain embodiments of the instant invention.

### DETAILED DESCRIPTION OF A PREFERRED EMBODIMENT

For the purposes of promoting an understanding of the principles of the present invention, reference will now be made to specific embodiments; however, the illustrated embodiments are merely exemplary and many additional embodiments of this invention are possible. It is understood that no limitation of the scope of the invention is thereby intended. Any alterations and further modifications of the illustrated embodiments, and such further application of the principles of the invention as illustrated herein are contemplated as would normally occur to one skilled in the art to which the invention relates.

The phrases "at least one," "one or more," and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. The terms "a" or "an" entity refers to one or more of that entity. As such, the terms "a" (or "an"), "one or more" and "at least one" can be used interchangeably herein. It is also to be noted that the terms "comprising," "including," and "having" can be used interchangeably.

The following is a process to make pet food, chews, or jerky from either one, or a combination of: poultry, meat, rabbit, fish, pork skin, beef skin, rabbit skin, or fish skin that maintains the original tissue integrity; a degree of toughness for chewing; convenience for storage and feeding; and a reliably safe and easily absorbed food for pets. Specifically, this invention has improved the art of making pet food made of one or a combination of: poultry, meat, rabbit, fish, pork skin, beef skin, rabbit skin, or fish skin. The following steps of an embodiment of the process comprise specific steps; each such step need not necessarily be performed, or performed in the specific order written. The steps taken, and in what order they are taken determine the end product:

A. Buy safe raw materials: try to choose fresh or frozen poultry, meat, rabbit, fish; or pork, beef, rabbit, or fish skin as raw materials known to be free from infections, try to transport said raw materials in sterile conditions; try to confirm proof of inspection of both the quality of materials and the sterility of the transportation of the materials if possible.

B. Proper standards: try to carefully adhere to product standards when choosing ingredients: try to check for pollution, impurities, and odours.

C. Defrost and clean: optionally, defrost raw materials using running water, place on defrosting shelf at room temperature, then wash with clean water until ingredient ph balance is neutral.

Steps D and E may be used interchangeably depending on the raw materials and whether desired end product is pet jerky or pet chews.

D. Processing raw materials for pet jerky: optionally, cut poultry, rabbit, or meat into pieces, or grind to paste, or mince meat by machines; get rid of the head, intestine, bones, skins of the fish, if used, and make into fillets; proceed with a de-fattening process and dry out the blood; whereby the raw materials become processed materials.

E. Processing raw materials for pet chews: optionally, clean the hairs, scales, and oil of the beef, pork, rabbit or fish skin, wash, cut into pieces, and form into desired shapes; whereby the raw materials become processed materials.

F. Add ingredients: optionally, add additional ingredients, possibly following a set ratio, animal product (possibly chicken breast) to plant product (possibly glycerin, salt, or sugar) ratio 100:1

G. Place on Dishes: optionally, neatly place ingredients on drying sheets or plates.

H. Quick-freezing: optionally, for pet jerky, put the minced poultry, rabbit, or meat into moulds and perform quick-freeze; or place poultry or meat pieces/chunks on plates and perform quick-freeze; or quick-freeze the fish fillets. Likewise, quick freeze the processed pet chews. Once quick-frozen, the processed materials of the raw materials of the pet jerky or pet chews become quick-frozen processed materials.

1. Cutting: the quick-frozen processed materials of pet jerky that were moulded have become quick-frozen processed bricks after the quick-freezing process; optionally, remove them from the moulds and cut them into solid rectangular pieces, or whatever shaped pieces you desire.

J. Drying: optionally, send the quick-frozen processed materials into the drying process in frozen form (optionally between -8 and -5°C), using vacuumed microwave drying process to dry the product, the microwave power may optionally be between 0.5kw and 3.75kw, dry room pressure may optionally be between -0.1Mpa and -0.095Mpa. The highest temperature for the dried materials may optionally be no higher than 55°C. Time for drying may be from 45-60 min; optionally, the material may be dried to a water content below 12%. Take out the material. When this process is complete said quick-frozen processed material becomes dried material.

K. Roasting: send the dried material into a roast room or passage, optionally set the temperature between 85 and 90°C, the duration of process may be 2 hours. When this process is complete the dried material becomes roasted material.

L. 2^{nd} picking of materials: optionally, perform 2^{nd} quality check as well as metal detection.

M. Packaging: optionally, products may be cooled to temperature that may be between 20 and 25°C, then packaged using plastic bags, liner boxes and outside boxes according to box numbers, or other packaging materials know to the art.

N. Irradiate: optionally, perform irradiation, which may be CO-60 radiation disinfection, with a possible radiation measurement of 7-8 KGY, although this may be higher or lower.

O. Stock out: optionally, load materials into box according to order numbers, drag to harbour and ship.

There may be no need to add any food additives; including preservatives, antioxidants, bleaches, blowing/foaming agents, colour retention agents, etc; the product may remain completely additive free during the manufacturing.

The summarized process of making pet food maintains the food's integrity, the shape is full and rigid, and the product will restore to its fresh state after rehydration making it easy for digestion and absorption by animals.

### SPECIFIC EXAMPLES OF EMBODIMENTS OF THE PROCESS

Below are real examples of embodiments of the invention, in order to further elaborate this invention:

### EXAMPLE 1

Take 10kg of frozen chicken breast, defrost thoroughly under room temperature (20°C), then use a mixer to chop for 8-10 minutes under high speed; after chopping, pour the poultry paste into a container for quick-freezing. Once frozen, cut the frozen meat brick into squares of 2.0cm-2.5cm each, place the frozen meat chunks on a net/plate and then place the net/plate into a vacuumed microwave dry room. Adjust the microwave power to 3,75kw and the dry room pressure to -0.1Mpa to -0.095Mpa. Set the highest temperature for the drying materials no higher than 55C and then let it dry for 45-60 minutes. Take the net/plate out when the humidity is lower than 12%. Put the product into a roasting passage/room, set the temperature to 85-90°C for approximately 2 hours; cool the product to 20-25°C; then package.

### EXAMPLE 2

Take 10kg of fresh beef, defrost thoroughly under room temperature (20°C), then use a mixer to chop for 8-10 minutes under high speed; after chopping, pour the meat paste into a container for quick-freezing. Once frozen, cut the frozen meat brick into squares of 1.0cm to 1.2 cm each; place the frozen meat chunks on the net/plate, then place the net/plate into a vacuumed microwave dry room. Adjust the microwave power to 0.5kw and the dry room pressure to - 0.1Mpa to -0.095Mpa. Set the highest temperature for the drying materials no higher than 55°C, let it dry for 45-60 minutes. Take the net/plate out when the humidity is lower than 12%. Put the product into a roasting passage/room, set temperature to 85-90°C for approximately 2 hours; cool the product to 20-25°C, then package.

### EXAMPLE 3

Take 20kg of frozen sea fish, defrost under room temperature until the skin is not frozen; cut off the heads, rid the scales, then clean the bones and skins. Let the resulting fillets soak in degreasing agent fluid for 20 to 40 minutes, then soak in citric acid 0.5g-kg for 40 to 60 minutes; Take the fillets out and start to quick-freeze each one. Put them into a vacuumed microwave dry room, and then adjust the microwave power to 2.25kw and the dry room pressure to -0.1Mpa to -0.095Mpa. Set the highest temperature for the drying materials no higher than 55°C, let it dry for 45-60 minutes. Take the net/plate out when the humidity is lower than 12%. Put the product into a roasting passage/room, set temperature to 85-90C for approximately 2 hours; cool the product to 20-25°C, then package.

### EXAMPLE 4

Take 20kg of pork skin, remove the surface hair with hot water, eliminate the subcutaneous fat, then clean and soak the material in degreasing agent fluid for 20 to 40 minutes. Once cleaned, form the desired shape, freeze, then put into the vacuumed microwave dry room. Adjust the microwave power to 1.85kw and the dry room pressure to -0.1Mpa to -0.095Mpa. Set the highest temperature for the drying materials no higher than 55°C, let it dry for 45-60 minutes. Take the net/plate out when the humidity is lower than 12%. Put the product into a roasting passage/room, set temperature to 85-90°C for approximately 2 hours; cool the product to 20-25°C, then package.

Embodiments of the invention may provide process for making pet jerky comprising:
choosing at least one of: poultry, meat, rabbit, or fish as raw material;
processing said raw material by at least one of cutting or grinding said raw material into pieces, paste, or minced meat, removing the head, intestine, bones, and skins to make filets, de-fattening or drying out the blood from said raw materials;
placing said processed raw material into moulds;
quick-freezing said processed raw material to become quick-frozen processed material, whereby said processed material placed into moulds becomes quick-frozen processed bricks;
removing said quick-frozen processed bricks from said moulds and cutting desired shapes into said quick-frozen processed bricks;
drying said quick-frozen processed bricks in frozen form between -8 and -5 degrees Celsius using a vacuumed microwave drying process, using a microwave power of between 0.5 and 3.75
kilowatts and in pressured enviroment between -0.1 and -0.095 megapascals, the temperature for the drying materials as they are heated not to become higher than 55degrees Celsius, and the time for drying being between 45-60 min, whereby the material is dried to a water content below 12%, whereby said quick-frozen processed bricks become dried material;
roasting said dried material in an enviorment where the temperature is set between 85 and 90 degrees Celsius, whereby said dried material becomes roasted material; and cooling said roasted material to a temperature between 20 and 25 degrees Celsius, whereby said roasted material becomes cooled material. The process may include packaging said cooled material.

Embodiments of the invention may provide a process for making pet chews comprising:
choosing at least one of: beef skin, pork skin, rabbit skin, or fish skin as raw material;
processing said raw material by at least one of cleaning at least one of hairs, scales, and oil off the raw material, washing and cutting the raw material into pieces or slices, and forming the raw material into desired shapes;
quick-freezing said processed material to become quick-frozen processed material;
drying said quick-frozen processed material in frozen form between -8 and -5 degrees Celsius using a vacuumed microwave drying process, using a microwave power of between 0.5 and 3.75 kilowatts and in an environment with a pressure between -0.1 and -0.095 megapascals, the temperature for the drying materials as they are heated not to become higher than 55degrees Celsius, and the time for drying being between 45-60 min, whereby the material is dried to a water content below 12%, whereby said quick-frozen processed material becomes dried material;
roasting said dried material in an enviroment where the temperature is set between 85 and 90 degrees Celsius, whereby said dried material becomes roasted material; and cooling said roasted material to a temperature between 20 and 25 degrees Celsius, whereby said roasted material becomes cooled material. The process may include packaging said cooled material.

It is to be understood that while certain forms of the invention are illustrated, it is not to be limited to the specific forms or arrangements herein described or shown. It will be apparent to those skilled in the art that various changes may be made without departing from the scope of the invention and the invention is not to be considered limited to what is shown and described in the specification.

### CONCLUSION

One skilled in the art will readily appreciate that the present invention is well adapted to carry out the objectives and obtain the ends and advantage mentioned, as well as those inherent therein. The embodiments, methods, procedures, and techniques described herein are presently representative of the preferred embodiments; are intended to be exemplary; and are not intended as limitations on the scope. Changes therein and other uses will occur to those skilled in the art which are encompassed within the spirit of the invention and are defined by the scope of the claims. Although the invention has been described in connection with specific preferred embodiments, it should be understood that the invention as claimed should not be unduly limited to such specific embodiments. Indeed, various modifications of the described modes for carrying out the invention which are obvious to those skilled in the art are intended to be within the scope of the claims.

## Claims

1. A process for making pet jerky comprising:
choosing one, or several of: poultry, meat, rabbit, or fish as raw material;
processing said raw material by cutting or grinding said raw material into pieces, paste, or minced meat; or if said raw material is fish, removing the head, intestine, bones, and skins to make filets; then de-fattening and or drying out the blood from said raw materials if necessary;
placing said paste or minced processed material into moulds;
quick-freezing said processed material to become quick-frozen processed material, whereby said processed material placed into moulds become quick-frozen processed bricks;
removing said quick-frozen processed bricks from said moulds and cutting desired shapes into said quick-frozen processed bricks;
drying said quick-frozen processed material in frozen form between -8 and -5 degrees Celsius using a vacuumed microwave drying process, using a microwave power of between 0.5 and 3.75 kilowatts and a dry room pressure between -0.1 and -0.095 megapascals, the temperature for the drying materials as they are heated not to become higher than 55degrees Celsius, and the time for drying being between 45-60 min, whereby the material is dried to a water content below 12%, whereby said quick-frozen processed material becomes dried material;
roasting said dried material in a roasting room or roasting passage where the temperature is set between 85 and 90 degrees Celsius, whereby said dried material becomes roasted material;
cooling said roasted material to a temperature between 20 and 25 degrees Celsius, whereby said roasted material becomes cooled material; and
packaging said cooled material.

2. The process for making pet jerky of claim 1, further comprising irradiation.

3. The process for making pet jerky of claim 1 or 2, wherein the irradiation comprises CO-60 radiation disinfecting, with a radiation measurement of 7 to 8 kilograys of radiation.

4. The process for making pet jerky of claim 1, 2 or 3, wherein the duration of said roasting is approximately two hours.

5. The process for making pet jerky of any one of the preceding claims, wherein the poultry chosen is chicken, duck or geese.

6. The process for making pet jerky of any one of the preceding claims, wherein the meat chosen is pork, beef, or goat.

7. The process for making pet jerky of any one of the preceding claims, wherein no food additives, including: preservatives, antioxidants, bleach, blowing or foaming agents, or colour retention agents are added.

8. The process for making pet jerky of any one of the preceding claims, further comprising rehydrating the cooled material to a fresh state easy for digestion and absorption by pets.

9. A process for making pet chews comprising:
choosing one, or several of: beef skin, pork skin, rabbit skin, or fish skin as raw material;
processing said raw material by cleaning the hairs, scales, and oil off the raw material, washing and cutting the raw material into pieces or slices, and forming the raw material into desired shapes;
quick-freezing said processed material to become quick-frozen processed material;
drying said quick-frozen processed material in frozen form between -8 and -5 degrees Celsius using a vacuumed microwave drying process, using a microwave power of between 0.5 and 3.75 kilowatts and a dry room pressure between -0.1 and -0.095 megapascals, the temperature for the drying materials as they are heated not to become higher than 55degrees Celsius, and the time for drying being between 45-60 min, whereby the material is dried to a water content below 12%, whereby said quick-frozen processed material becomes dried material;
roasting said dried material in a roasting room or roasting passage where the temperature is set between 85 and 90 degrees Celsius, whereby said dried material becomes roasted material;
cooling said roasted material to a temperature between 20 and 25 degrees Celsius, whereby said roasted material becomes cooled material; and
packaging said cooled material.

10. The process for making pet chews of claim 9, further comprising irradiation.

11. The process for making pet chews of claim 10, wherein the irradiation comprises CO-60 radiation disinfecting, with a radiation measurement of 7 to 8 kilograys of radiation.

12. The process for making pet chews of any one of claims 9 to 11, wherein the poultry chosen is chicken, duck or geese.

13. The process for making pet chews of any one of claims 9 to 12, wherein the meat chosen is pork, beef, or goat.

14. The process for making pet chews of any one of claims 9 to 13, wherein no food additives, including: preservatives, antioxidants, bleach, blowing or foaming agents, or colour retention agents are added.

15. The process for making pet chews of any one of claims 9 to 14, further comprising rehydrating the cooled material to a fresh state easy for digestion and absorption by pets.
